# EUROPÄISCHE PATENTSCHRIFT

(11) **EP 3 938 153 B1**
(45) Veröffentlichungstag und Bekanntmachung des Hinweises auf die Patenterteilung: **22.02.2023**
(21) Anmeldenummer: 20703379.6
(22) Anmeldetag: 17.01.2020
(51) Int. Cl.: B25J 15/00, B25J 15/02, H01R 43/28

(54) **GREIFER FÜR DIE AUTOMATISIERTE VERDRAHTUNG ELEKTRISCHER KOMPONENTEN EINER ELEKTRISCHEN SCHALTANLAGE, EIN ENTSPRECHENDER ROBOTER UND EIN ENTSPRECHENDES VERFAHREN**
GRIPPER FOR THE AUTOMATED WIRING OF ELECTRICAL COMPONENTS OF AN ELECTRICAL SWITCHING STATION, A CORRESONDING ROBOT AND A CORRESPONDING METHOD
PINCE POUR LE CÂBLAGE AUTOMATISÉ DE COMPOSANTS ÉLECTRIQUES D'UNE INSTALLATION DE COMMUTATION ÉLECTRIQUE, ROBOT CORRESPONDANT ET PROCÉDÉ CORRESPONDANTE

(30) Priorität: 15.03.2019 DE 102019106710
(43) Veröffentlichungstag der Anmeldung: 19.01.2022
(73) Patentinhaber: Rittal GmbH & Co. KG, 35745 Herborn (DE)
(72) Erfinder: BACH, Michael, 35768 Siegbach (DE); JUNG, Kevin, 35708 Haiger (DE); BÄCHLER, Andreas Michael, 35708 Haiger (DE)
(74) Vertreter: Angerhausen, Christoph
(86) Internationale Anmeldenummer: PCT/DE2020/100034
(87) Internationale Veröffentlichungsnummer: WO 2020/187349

(56) Entgegenhaltungen:
- EP-A1- 2 433 760
- EP-A2- 0 924 818
- DE-A1- 3 606 059
- DE-A1- 4 431 254
- DE-A1-102012 009 649
- JP-A- S5 781 082
- US-A- 4 617 731

## Beschreibung

Die Erfindung geht aus von einem Greifer für die automatisierte Verdrahtung elektrischer Komponenten einer elektrischen Schaltanlage, wobei der Greifer mindestens zwei Greiffinger aufweist. Ein derartiger Greifer ist aus der US 8,113,557 B2 bekannt.

Die US 4,617,731 A beschreibt einen weiteren derartigen Greifer, der feste Kabelantriebe und mindestens zwei Greiffinger aufweist, die zwischen sich einen Kabelführungskorridor begrenzen, dessen Durchlassquerschnitt an einem distalen Ende der Greiffinger von sich gegenüberstehenden Greifbacken der Greiffinger und in Bezug auf das distale Ende weiter proximal von sich gegenüberstehenden Kabelantrieben der Greiffinger begrenzt ist. Die beiden Greiffinger sind zur Variation des Durchlassquerschnitts über eine Schwenkeinheit in einer Verstellrichtung zueinander verstellbar, die einer Querschnittsrichtung des Durchlassquerschnitts entspricht. Ähnliche Greifer zeigen auch die DE 36 06 059 A1, die EP 0 924 818 A2, die DE 44 31 254 A1, die JP S57 81082 A, die DE 10 2012 009649 A1 und die EP 2 433 760 A1.

Bei der Fertigung von Schalt- und Steuerungsanlagen ist die Verdrahtung der elektrischen Komponenten einer der zentralen und zeitintensivsten Arbeitsvorgänge, der bis heute weitestgehend manuell durchgeführt wird. Dabei stellt nicht nur die hohe Komplexität dieses Arbeitsvorgangs, sondern vor allem auch der Anspruch einer hundertprozentigen Fehlerfreiheit große Anforderungen an die die Verdrahtung durchführende Person.

Für die Optimierung des Verdrahtungsvorgangs gibt es verschiedene technische Hilfsmittel in unterschiedlichen Unterstützungsstufen. Dies reicht von Handwerkzeugen und/oder Halbautomaten zur Kabelkonfektionierung bis hin zu vollautomatischen Anlagen, die einzelne Drähte vollständig konfektionieren, das heißt ablängen, abisolieren, Aderendhülsen aufbringen und verkrimpen. Die so hergestellten vorkonfektionierten Kabel können anschließend als loser und einzelner Draht, als sequenziell miteinander verbundene oder aufgereihte Drähte oder als Drahtbündel ausgegeben werden.

Eine auf eine Rolle aufgewickelte Kabelsequenz ist aus der DE 10 2015 103 444 A1 bekannt. Die BE 101 965 1 A beschreibt einen multifunktionalen Bearbeitungskopf, der in den Endeffektor einer Verdrahtungsanlage integriert ist. Die DE 44 31 254 A1 und die EP 0 917 259 B1 beschreiben jeweils ein Verfahren und eine Vorrichtung zum Verdrahten von Anschlussstellen von Komponenten elektrischer Geräte. Die EP 0 259 394 B1 beschreibt ein Werkzeug zum Verlegen von Kabeln. Die WO 2018/189103 A1 zeigt einen Bearbeitungskopf sowie eine Anlage und ein Verfahren zum automatisierten Bestücken von Steckergehäusen mit Leitungselementen. Ein Greifer für eine Kabelbearbeitungseinrichtung ist aus der EP 1447 888 A1 bekannt. Die EP 0 440 955 B1 beschreibt eine Einrichtung zum automatischen Montieren von elektrischen Leitern mit Kontaktteilen in Steckergehäusen.

Die nachveröffentlichte deutsche Patentanmeldung DE 10 2018 133 337 A1 beschreibt ein Verfahren zum Verdrahten von elektrischen Komponenten einer auf einer Montageplatte angeordneten elektrischen Schaltanlage mit Hilfe eines Knickarmroboters, der an seinem Endeffektor einen Greifer mit zwei zueinander verstellbaren Greiffingern aufweist. Um das prozesssichere Handling der biegeschlaffen Kabel zu ermöglichen, wird ein kollaboratives Greifersystem vorgeschlagen, bei dem ein Knickarmroboter mit je einem Greifer an seinem Endeffektor jeweils eines der beiden gegenüberliegenden Enden des zu verdrahtenden Kabels hält. Diese Systeme sind jedoch entsprechend komplex und damit aufwendig und kostenintensiv in der Bereitstellung.

Es ist die Aufgabe der Erfindung, einen Greifer der eingangs beschriebenen Art derart weiterzuentwickeln, dass er mit einfachen technischen Mitteln das Handling von biegeschlaffen Kabeln und sonstigen Drähten zwecks Verdrahtung elektrischer Schaltanlagen erlaubt.

Diese Aufgabe wird durch einen Greifer mit den Merkmalen des Anspruchs 1 gelöst. Der nebengeordnete Anspruch 11 beschreibt einen entsprechenden Roboter und der nebengeordnete Anspruch 12 ein entsprechendes Verfahren. Vorteilhafte Ausführungsformen sind jeweils Gegenstand der abhängigen Ansprüche.

Demgemäß ist bei dem Greifer vorgesehen, dass die Greiffinger zwischen sich einen Kabelführungskorridor begrenzen, dessen Durchlassquerschnitt an einem distalen Ende der Greiffinger von sich gegenüberstehenden Greifbacken der Greiffinger und in Bezug auf das distale Ende weiter proximal von sich gegenüberstehenden Kabelantrieben der Greiffinger begrenzt ist. Zur Variation des Durchlassquerschnittes ist vorgesehen, dass die beiden Greiffinger über eine Linearstelleinheit in einer Verstellrichtung linear zueinander verstellbar sind, die einer Querschnittsrichtung des Durchlassquerschnitts entspricht.

Dadurch, dass die wesentlichen Komponenten des Greifers, nämlich die sich gegenüberstehenden Greifbacken zum Halten eines Kabels, insbesondere eines Kabelendes, sowie die sich gegenüberstehenden Kabelantriebe der Greiffinger selbst den Kabelführungskorridor begrenzen und über die Linearstelleinheit zur Variation des Durchlassquerschnittes des Kabelführungskorridors linear zueinander verstellbar sind, weist der erfindungsgemäße Greifer eine geringe Komplexität auf.

Die Greiffinger können jeweils an ihrem proximalen Ende mit einem Stellglied der Linearstelleinheit verbunden sein und sich senkrecht zu jeweils einer Verstellebene des Stellglieds erstrecken.

Es kann vorgesehen sein, dass mindestens einer der Kabelantriebe mindestens einer der Greiffinger mindestens einen Rotationsantrieb aufweist. Dabei können sich gegenüberstehende Rotationsantriebe der beiden Greiffinger eine gegenläufige Rotationsrichtung aufweisen. Die beiden Rotationsantriebe können beispielsweise nach dem Prinzip einer Bandpresse mindestens zwei gegenüberstehende Druckbänder aufweisen, die unter Ausbildung eines Walzenspaltes zueinander ausgerichtet sind. Die Walzen können auch aneinander anliegen, soweit zwischen den Walzen kein Kabel aufgenommen ist. Die Walzen weisen vorzugsweise an ihrem Außenumfang eine identische und gegenläufige Rotationsgeschwindigkeit auf. Die Rotationsantriebe sind grundsätzlich auf keine bestimmte Ausführungsform beschränkt, solange das zuvor genannte Prinzip erreicht wird. Demgemäß sei beispielhaft erwähnt, dass die Rotationsantriebe mindestens ein Rad, mindestens eine Walze und/oder mindestens ein Transportband aufweisen können. Insbesondere kann beispielsweise ein Paar sich gegenüberstehender Rotationsantriebe je Rotationsantrieb mindestens ein Rad, mindestens eine Walze und/oder mindestens ein Transportband aufweisen.

Die sich gegenüberstehenden Kabelantriebe können in der Verstellrichtung der Greiffinger verstellbar und mechanisch vorgespannt, vorzugsweise federvorgespannt sein. So kann sichergestellt werden, dass unabhängig von einem verarbeiteten Kabelquerschnitt über die Kabelantriebe stets ein gleichmäßiger Anpressdruck auf das zu transportierende Kabel ausgeübt und damit eine zuverlässige Haftreibung zwischen dem Kabel und den Kabelantrieben bereitgestellt ist. Ebenso kann auf diese Weise sichergestellt werden, dass beim Überführen der Greiffinger von einer Kabelannahmeposition, in der die Greiferbacken zwischen sich den Durchlassquerschnitt über einen Kabelquerschnitt und gegebenenfalls den Querschnitt einer Kabelendbehandlung hinaus erweitern, in eine Kabeltransportposition, in der die Greifbacken zwischen sich den Durchlassquerschnitt auf einen Kabelquerschnitt oder einen größeren Querschnitt, der vorzugsweise jedoch geringer als der maximale Querschnitt einer Kabelendbehandlung ist, begrenzen, die Kabelantriebe mit dem Kabel in Kontakt stehen und die für den Kabelantrieb erforderliche Haftreibung zu dem Kabel aufweisen.

Insbesondere bei der Verarbeitung langer Kabel kann es zweckmäßig sein, das von dem Greifer aufgenommene Kabel kontrolliert von dem Greifer wegzuführen. Dazu kann bei einer Ausführungsform vorgesehen sein, dass an einer proximalen Kabelauslassseite der sich gegenüberstehenden Kabelantriebe eine Kabelführung vorgesehen ist, die in den Durchlassquerschnitt mündet. Die Kabelführung kann beispielsweise ein Leerrohr sein. Die Kabelauslassseite keine eine proximale Öffnung eines Walzenspaltes sein, der zwischen den beiden Kabelantrieben ausgebildet ist.

Die sich gegenüberstehenden Greifbacken können jeweils um eine sich in der Verstellrichtung erstreckende Achse verstellbar sein. Beispielsweise können die sich gegenüberstehenden Greifbacken gleichläufig in einem Winkelbereich von 0° bis 180° zwischen zwei Stellpositionen verstellbar sein, etwa zwischen zwei um 180° zueinander verstellten Positionen um die Achse verstellbar sein. Die Greifbacken können jedoch insbesondere auch um einen beliebigen Winkel zwischen 0° und 180° um die Achse verstellbar sein.

Die Greifbacken können an ihren in Bezug auf die Achse gegenüberliegenden Längsenden jeweils ein Greifende aufweisen, von denen vorzugsweise in beiden der um 180° zueinander verstellten Positionen jeweils eines der Greifenden das distale Ende seines Greiffingers und das jeweils andere Greifende an einer gegenüberliegenden Seite in Bezug auf die Achse den Kabelantrieben zugewandt ist. Die Greifbacken sind vorzugsweise in Bezug auf die Achse symmetrisch ausgebildet. Die gegenüberstehenden Greifbacken können als komplementäre Greifbacken ausgebildet sein, insbesondere können die gegenüberstehenden Greifbacken komplementär ineinander greifende Konturen aufweisen. Die ineinander greifenden Greifbacken können zwischen sich den Kabelführungskorridor mit dem Durchlassquerschnitt ausbilden, wobei der Durchlassquerschnitt durch Verstellen der Greiffinger mit Hilfe der Linearstelleinheit eingestellt werden kann. Es kann vorgesehen sein, dass auch in einer Kabeltransportposition, in der die Greifbacken zwischen sich den Durchlassquerschnitt auf einen Kabelquerschnitt oder einen größeren Querschnitt, der vorzugsweise jedoch geringer als der Querschnitt einer Kabelendbehandlung ist, begrenzen, die gegenüberstehenden komplementären Greifbacken immer noch teilweise ineinander greifen, wobei sie den Kabelführungskorridor umlaufend begrenzen, so dass ein zwischen den Greifbacken in dem Kabelführungskorridor aufgenommenes Kabel sicher zwischen den Greifbacken gehalten ist.

Die Linearstelleinheit kann dazu eingerichtet sein, die Greiffinger wahlweise in mindestens eine der folgenden Positionen relativ zueinander zu bringen:
a. eine Kabelhalteposition, in der die Greifbacken zwischen sich den Durchlassquerschnitt auf einen Kabelquerschnitt, den Querschnitt einer Kabelendbehandlung oder einen geringeren Querschnitt begrenzen;
b. eine Kabeltransportposition, in der die Greifbacken zwischen sich den Durchlassquerschnitt auf einen Kabelquerschnitt oder einen größeren Querschnitt, der vorzugsweise jedoch geringer als der Querschnitt einer Kabelendbehandlung ist, begrenzen; und
c. eine Kabelannahmeposition, in der die Greifbacken zwischen sich den Durchlassquerschnitt über einen Kabelquerschnitt und gegebenenfalls eine Kabelendbehandlung hinaus erweitern.

Die Greiffinger können ausschließlich über die Linearstelleinheit zueinander verstellbar sein. Dadurch wird eine hohe Prozesssicherheit gewährleistet.

Gemäß einem anderen Aspekt betrifft die Erfindung einen Roboter, vorzugsweise einen Knickarmroboter, wie er beispielsweise aus der nachveröffentlichten deutschen Patentanmeldung 10 2018 133 337.4 bekannt ist, der einen Greifer der zuvor beschriebenen Art aufweist.

Gemäß einem noch anderen Aspekt betrifft die Erfindung ein Verfahren für die automatisierte Verdrahtung elektrischer Komponenten einer elektrischen Schaltanlage, wobei das Verfahren die Schritte aufweist:
a. Abnehmen eines zumindest teilweise vorkonfektionierten Kabels von einer Kabelübergabeschnittstelle mit dem Greifer und/oder dem Roboter der zuvor beschriebenen Art;
b. Kontaktieren eines ersten Kabelendes des Kabels an einer ersten Kontaktstelle einer ersten elektrischen Komponente der elektrischen Schaltanlage, Verlegen des Kabels von der ersten Kontaktstelle zu einer zweiten Kontaktstelle einer zweiten elektrischen Komponenten der elektrischen Schaltanlage und Kontaktieren des zweiten Kabelendes an der zweiten elektrischen Kontaktstelle;
dadurch gekennzeichnet, dass das Abnehmen des Kabels von der Kabelübergabeschnittstelle aufweist:
c. Überführen der Greiffinger über die Linearstelleinheit in eine Kabelannahmeposition, in der die Greifbacken zwischen sich den Durchlassquerschnitt über einen Kabelquerschnitt des Kabels und gegebenenfalls eine Kabelendbehandlung des Kabels hinaus erweitern;
d. Einführen des zweiten Kabelendes über das distale Ende und den erweiterten Durchlassquerschnitt der Greifbacken in den Kabelführungskorridor so weit, bis das zweite Kabelende an die Kabelantriebe heranreicht; und
e. Transportieren des Kabels mit den Kabeltrieben in den Kabelführungskorridor, bis das erste Kabelende die Greifbacken erreicht.

Wenn das erste Kabelende die Greifbacken erreicht hat, kann es von den Greifbacken gehalten und in der zuvor beschriebenen Weise an der ersten Kontaktstelle der ersten elektrischen Komponenten kontaktiert werden. Während des darauffolgenden Verlegens des Kabels von der ersten Kontaktstelle zu der zweiten Kontaktstelle kann das Kabel über den Kabelführungskorridor wieder aus dem Greifer austreten, wobei bedarfsweise das Kabel mit dem Kabelantrieb aus dem Kabelführungskorridor heraustransportiert wird, bis das zweite Kabelende die Greifbacken erreicht.

Nach dem Verlegen des Kabels von der ersten Kontaktstelle zu der zweiten Kontaktstelle und vor dem Kontaktieren des zweiten Kabelendes an der zweiten elektrischen Kontaktstelle kann vorgesehen sein, dass die sich gegenüberstehenden Greifbacken gleichläufig und um 180° oder gegebenenfalls auch ein anderes Winkelmaß zwischen 0° und 360° verstellt werden, um das zweite Kabelende am distalen Ende des Greifers anzuordnen, so dass das zweite Kabelende einer zweiten elektrischen Komponenten zugeführt und an dieser kontaktiert werden kann.

Das Transportieren des Kabels kann das Überführen der Greiffinger über die Linearstelleinheit von der Kabelannahmeposition in eine Kabeltransportposition aufweisen, in der die Greifbacken zwischen sich den Durchlassquerschnitt auf einen Kabelquerschnitt oder einen größeren Querschnitt begrenze, der vorzugsweise jedoch geringer als ein maximaler Querschnitt einer Kabelendbehandlung ist, so dass das Kabelende zwischen den Greifbacken hindurchgeführt werden kann.

Das Kontaktieren des ersten und/oder des zweiten Kabelendes kann das Überführen der Greiffinger über die Linearstelleinheit in eine Kabelhalteposition aufweisen, in der die Greifbacken zwischen sich den Durchlassquerschnitt auf einen Kabelquerschnitt, den Querschnitt einer Kabelendbehandlung oder einen geringem Querschnitt als diese begrenzen, so dass das Kabelende zwischen den Greifbacken gehalten wird.

Weitere Einzelheiten der Erfindung werden anhand der nachstehenden Figuren erläutert. Dabei zeigt:
- Figur 1: eine Anordnung für die Vorkonfektionierung und die Verdrahtung vorkonfektionierter Kabel mit Hilfe eines Knickarmroboters gemäß dem Stand der Technik;
- Figur 2: eine Seitenansicht einer Ausführungsform eines erfindungsgemäßen Greifers, der beispielsweise als der Greifer in der Anordnung gemäß Figur 1 verwendet werden kann;
- Figur 3: eine perspektivische Ansicht des Greifers gemäß Figur 2; und
- Figur 4: ein schematisches Ablaufdiagramm eines erfindungsgemäßen Verfahrens.

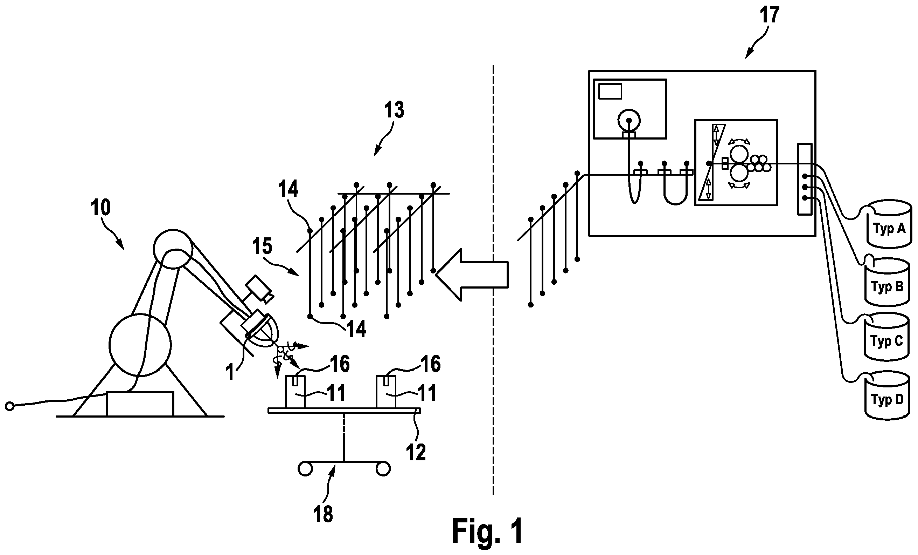

Die Figur 1 zeigt eine beispielhafte Anordnung für die Verdrahtung von elektrischen Komponenten 11 einer auf einer Montageplatte 12 ausgebildeten elektrischen Schaltanlage. Die Montageplatte 12 ist von einem Transportwagen 18 horizontal ausgerichtet gehalten, so dass über einen Knickarmroboter 10 mit einem Greifer 1 von oben auf die Komponenten 11 zwecks Kabelzuführung Kontaktierung und ggf. Qualitätssicherung zugegriffen werden kann. Die Montageplatte 12 kann je nach Ausführungsform alternativ unter einem Winkel zur Horizontalen ausgerichtet sein.

Der Knickarmroboter 10 weist einen Endeffektor mit einem Greifer 1 auf, über welchen von einer Übergabeschnittstelle 13 vorkonfektionierte Kabel 15 abgenommen und den Komponenten 11 zwecks Kontaktierung zugeführt werden können. Die vorkonfektionierten Kabel 15 können mit Hilfe eines Kabelkonfektionierungsautomaten 17 hergestellt werden, wie dies grundsätzlich aus dem Stand der Technik bekannt ist.

In einem ersten Schritt nimmt der Roboter 10 mit Hilfe seines Greifers 1 ein erstes der vorkonfektionierten Kabel 15 von der Schnittstelle 13 ab, indem er das Kabel 15 an einen seiner gegenüberliegenden vorkonfektionierten Kabelenden 14 greift. Daraufhin wird das gehaltene Kabelende 14 einer ersten Kontaktstelle 16 einer ersten elektrischen Komponente 11 zugeführt und an dieser kontaktiert. Nachdem das erste Kabelende 14 an der ersten Kontaktierungsstelle 16 kontaktiert worden ist, wird das Kabel 15 von der ersten Kontaktstelle 16 zu der zweiten Kontaktstelle 16 einer zweiten elektrischen Komponente 11 der elektrischen Schaltanlage verlegt und das zweite Kabelende 14 an der zweiten elektrischen Kontaktstelle 16 kontaktiert.

Problematisch ist dabei, dass das Kabel 15 als biegeschlaffes Bauteil während des Kontaktierens und Verlegens des Kabels 15 derart manövriert werden muss, dass sich das Kabel nicht mit den elektrischen Komponenten 11 der elektrischen Schalanlage oder weiteren Aufbauten auf der Montageplatte 12 verheddert. Zur Erzielung einer hohen Prozesssicherheit ist daher eine präzise Führung des Kabels über den gesamten Prozessablauf von dem Abnehmen des Kabels 11 von der Schnittstelle 13 bis zum Kontaktieren des zweiten Kabelendes an der zweiten Kontaktstelle 16 der zweiten Komponente 11 erforderlich.

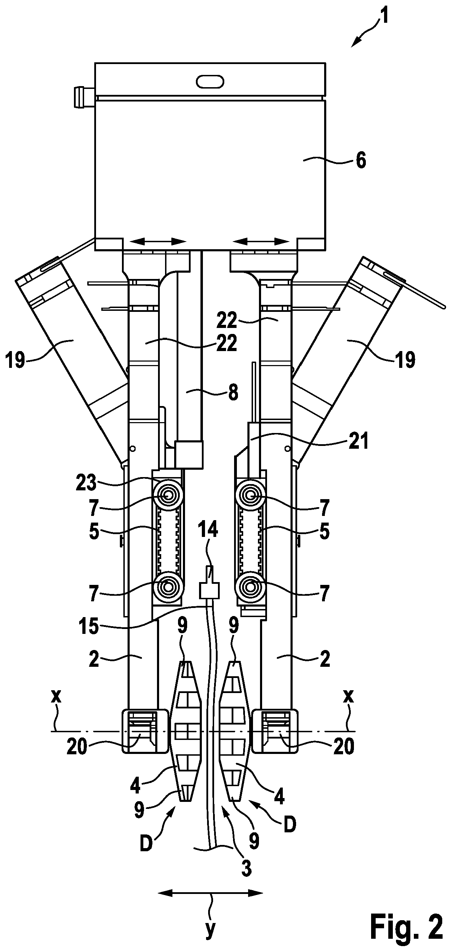

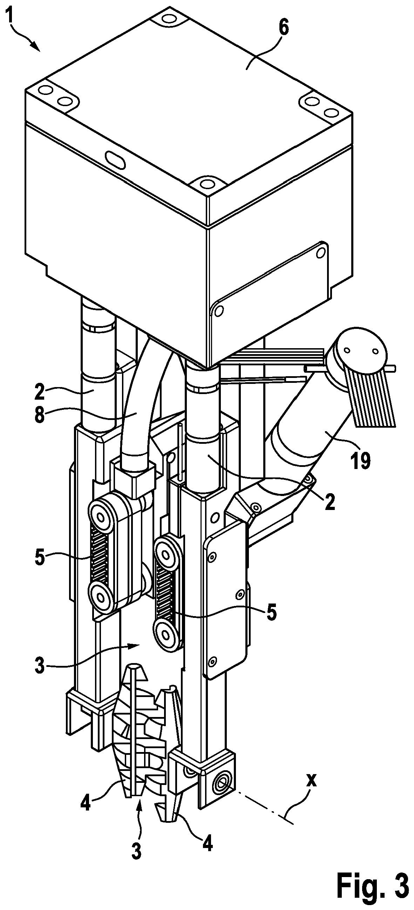

Zur Lösung dieser Problematik wird erfindungsgemäß ein Greifer 1 vorgeschlagen, wie er gemäß einer beispielhaften Ausführungsform in den Figuren 2 und 3 gezeigt ist. Der Greifer 1 weist einen ersten und zweiten Greiffinger 2 auf, die über eine Linearstelleinheit 6 ausschließlich linear zueinander verstellbar sind, derart, dass sie ihren Abstand senkrecht zu ihrer Längsrichtung zueinander variieren. Zwischen den Greiffingern 2 ist ein Kabelführungskorridor 3 ausgebildet, der einerseits durch komplementäre Greifbacken 4 an gegenüberliegenden Seiten der Greiffinger 2 und andererseits durch gegenüberstehende Kabelantriebe 5 begrenzt ist. An seinem proximalen Ende mündet der Kanal 3 in eine Kabelführung 8, die beispielsweise als ein Leerrohr ausgebildet sein kann, über welche ein in das Leerrohr eingeführtes Kabel prozesssicher von dem Greifer 1 weggeführt werden kann.

Die Kabelantriebe 5 sind als gegenüberstehende Laufbänder ausgebildet, die jeweils über ein Paar Rotationsantriebe 7 aufgespannt sind. Für eine optimale Kabelanpressung sind auch zusätzliche Andruckrollen zwischen den Rotationsantrieben 7 denkbar. Die Rotationsantriebe 7 können beispielsweise als Zahnräder ausgebildet sein, wobei mindestens eines der beiden Rotationsantriebe 7 pro Kabelantrieb 5 über einen Motor 19 angetrieben ist. Die die Zahnräder umgebenden Laufbänder können nach Art eines Zahnriemens mit an der Innenseite angeordneten Hervorhebungen ausgebildet sein, die in entsprechende Ausnehmungen der Zahnräder 7 eingreifen. Die beiden Kabelantriebe 5 können gegenläufig und mit derselben Geschwindigkeit angetrieben sein.

Während in den Figuren 2 und 3 der Greifer 1 in einer Kabelannahmeposition gezeigt ist, bei welcher der Querschnitt des Kabelführungskorridors 3 über einen Kabelquerschnitt hinaus aufgeweitet ist, um das Einführen eines Kabels über die distalen Greifenden D der Greiferbacken 4 bis zu den Kabelantrieben 5 zu ermöglichen, können die Greiffinger 2 über den Linearantrieb 6 einander angenähert werden, wodurch sich der Durchlassquerschnitt des Kabelführungskorridors 3 verjüngt. In einer Kabeltransportposition können die Greiferbacken 4 zwischen sich den Durchlassquerschnitt des Kabelführungskorridors 3 auf einen Kabelquerschnitt oder etwas größer als diesen begrenzen. Insbesondere kann vorgesehen sein, dass in der Kabeltransportposition der Durchlassquerschnitt geringer als der Querschnitt einer Kabelendbehandlung ist, so dass beim Transport eines Kabels durch den in der zuvor beschriebenen Position verjüngten Kabelführungskorridor 3 hindurch das Kabel mit seiner endseitigen Aderendbehandlung an dem distalen Ende D der Greifbacken 4 zur Anlage kommt.

Je Greiffinger 2 weist der Greifer 1 einen Motor 19 für den Antrieb des dem Greiffinger 2 jeweils zugeordneten Kabelantriebs 5 auf.

Die sich gegenüberstehenden Greifbacken 4 sind jeweils um eine sich in der Verstellrichtung y der Greiffinger 2 erstreckende Achse x zueinander verstellbar. Insbesondere können die Greifbacken 4 um die Achse x mit Hilfe von Stellantrieben 22, etwa Servomotoren, die über jeweils eine Spindel (nicht dargestellt), die ein Getriebe 20 antreibt, an jeweils eine der Greifbacken 4 angekoppelt sind, gleichläufig und zwischen zwei um 180° zueinander verstellten Positionen um die Achse x verstellt werden. Dabei weisen die Greifbacken 4 an ihren in Bezug auf die Achse x gegenüberliegenden Längsenden jeweils ein Greifende 9 auf, von denen in beiden der um 180° zueinander verstellten Positionen jeweils eines der Greifenden 9 das distale Ende D seines jeweiligen Greiffingers 2 und das jeweils andere Greifende 9 an einer gegenüberliegenden Seite in Bezug auf die Achse x den Kabelantrieben 5 zugewandt ist. In Bezug auf die Achse x sind die Greifbacken jeweils symmetrisch ausgebildet.

Die Kabelantriebe 5, insbesondere die Rotationsantriebe 7 der Kabelantriebe 5 sind mit einem Lastsensor 21 gekoppelt, mit Hilfe welches über eine ansteigende Last der die Kabelantriebe 5 antreibenden Motoren 19 ermittelt werden kann, dass sich ein Kabelende im Eingriffbereich der Kabelantriebe 5 befindet. Beispielsweise kann das Kabelende eine Kabelendbehandlung aufweisen, die einen größeren Querschnitt als das zwischen den Kabelantrieben 5 angeordnete Kabel aufweist, so dass die Kabelendbehandlung an einer Einmündung zwischen den beiden Kabelantrieben 5 in den zwischen den Kabelantrieben 5 begrenzten Kabelführungskorridor 3 zur Anlage kommt und einen über einen Lastanstieg erfassbaren Widerstand darstellt. Wenn der Lastsensor 21 den Lastanstieg erfasst hat, können daraufhin die Motoren 19 angesteuert werden, den Antrieb der Rotationsantriebe 7 zu unterbrechen.

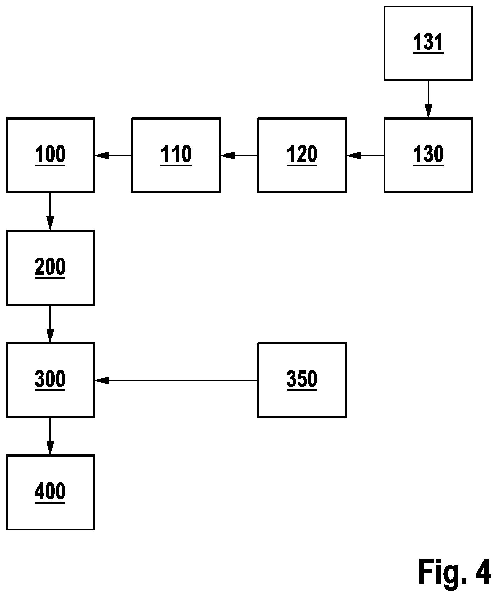

In der Zusammenschau der Figur 4 mit den Figuren 1 bis 3 wird ein erfindungsgemäßes Verfahren für die automatisierte Verdrahtung gemäß einer Ausführungsform der Erfindung beschrieben. Demgemäß weist das Verfahren in einem ersten Schritt 100 das Abnehmen eines zumindest teilweise vorkonfektionierten Kabels 15 von einer Kabelübergabeschnittstelle 13 mit dem Greifer 1 eines Roboters 10 auf. Das abgenommene Kabel 15 kann in einem folgenden Schritt 200 über sein erstes Kabelende 14 an einer ersten Kontaktstelle 16 einer ersten elektrischen Komponente 11 der elektrischen Schaltanlage kontaktiert werden. Nach dem Kontaktieren 200 des ersten Kabelendes 14 kann das Kabel 15 von der ersten Kontaktstelle 16 zu einer zweiten Kontaktstelle 16 einer zweiten elektrischen Komponente 11 der elektrischen Schaltanlage in einem Schritt 300 verlegt werden. Danach kann das zweite Kabelende 14 in einem Schritt 400 an einer zweiten elektrischen Kontaktstelle 16 kontaktiert werden.

Bei dem Abnehmen 100 des Kabels 15 von der Kabelübergabeschnittstelle 13 kann in einem Schritt 110 der Greiffinger 2 über die Linearstelleinheit 6 in eine Kabelannahmeposition gebracht werden, in der die Greifbacken 4 zwischen sich den Durchlassquerschnitt über einen Kabelquerschnitt des zu verdrahtenden Kabels 15 und über einen Querschnitt der Kabelendbehandlung des Kabels 15 hinaus erweitern. Dies ermöglicht es, dass in einem Schritt 120 das zweite Kabelende 14 über das distale Ende D der Greiffinger 2 und den erweiterten Durchlassquerschnitt der Greifbacken 4 in den Kabelführungskorridor 3 eingeführt wird, bis das zweite Kabelende 14 an die Kabelantriebe 5 heranreicht. Durch Betätigen der Kabelantriebe 5 kann dann in einem Schritt 130 das Kabel in den Kabelführungskorridor 3 transportiert werden, bis das erste Kabelende 14 die Greifbacken erreicht. Letzteres ist in der zuvor beschriebenen Weise mit Hilfe des Lastsensors 21 reproduzierbar erfassbar.

Das Transportieren 130 des Kabels 15 kann das Überführen 131 der Greiffinger 2 über die Linearstelleinheit 6 von der Kabelannahmeposition in eine Kabeltransportposition aufweisen, in der die Greifbacken 4 zwischen sich den Durchlassquerschnitt auf einen Kabelquerschnitt oder einen größeren Querschnitt als diesen erweitern, der jedoch geringer als der maximale Querschnitt der Kabelendbehandlung ist, so dass das Kabel 15 zwischen den Greifbacken hindurchgeführt werden kann, das Kabelende 14 mit seiner größeren Endbehandlung, etwa eine Aderendhülse, jedoch an dem distalen Ende D der Greifbacken 4 zur Anlage kommt.

Das Kontaktieren 200 des ersten und des zweiten Kabelendes kann das Überführen 131 der Greiffinger 2 über die Linearstelleinheit 6 in eine Kabelhalteposition aufweisen, in der die Greifbacken 4 zwischen sich den Durchlassquerschnitt auf einen Kabelquerschnitt, den Querschnitt einer Kabelendbehandlung oder einen geringeren Querschnitt begrenzen, so dass das Kabelende 14 zwischen den Greifbacken 4 gehalten wird.

Das Verfahren kann weiterhin nach dem Verlegen 300 des Kabels 15 von der ersten Kontaktstelle 16 zu der zweiten Kontaktstelle 16 und vor dem Kontaktieren 400 des zweiten Kabelendes 14 an der zweiten elektrischen Kontaktstelle 16 das Verstellen 350, insbesondere das Rotieren der sich gegenüberstehenden Greifbacken 4 um die Achse x in gleichläufiger Weise und um 180° umfassen. Dies ist insbesondere dazu erforderlich, um das an den Greifbacken 4 anliegende beziehungsweise von den Greifbacken 4 erfasste zweite Kabelende 14 an das distale Ende D des Greifers 1 zu bringen, so dass das zweite Kabelende 14, insbesondere die dort vorgesehene Kabelendbehandlung, der zweiten Kontaktstelle 16 der zweiten elektrischen Komponente 11 zugeführt werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Greifer
- 2: Greiffinger
- 3: Kabelführungskorridor
- 4: Greifbacken
- 5: Kabelantrieb
- 6: Linearstelleinheit
- 7: Rotationsantrieb
- 8: Kabelführung
- 9: Greifende
- 10: Roboter
- 11: Elektrische Komponente
- 12: Montageplatte
- 13: Kabelübergabeschnittstelle
- 14: Kabelende
- 15: Kabel
- 16: Kontaktstelle
- 17: Kabelkonfektionierungsautomat
- 18: Transportwagen
- 19: Motor
- 20: Getriebe
- 21: Lastsensor
- 22: Stellantrieb
- 23: Kabelauslassseite
- 100: Abnehmen
- 110: Überführen
- 120: Einführen
- 130: Transportieren
- 131: Überführen
- 200: Kontaktieren
- 300: Verlegen
- 350: Verstellen
- 400: Kontaktieren
- D: Distales Ende
- x: Achse
- y: Verstellrichtung

## Patentansprüche

1. Greifer (1) für die automatisierte Verdrahtung elektrischer Komponenten (11) einer elektrischen Schaltanlage, wobei der Greifer (1) mindestens zwei Greiffinger (2) aufweist, **dadurch gekennzeichnet, dass** die Greiffinger (2) zwischen sich einen Kabelführungskorridor (3) begrenzen, dessen Durchlassquerschnitt an einem distalen Ende (D) der Greiffinger (2) von sich gegenüber stehenden Greifbacken (4) der Greiffinger (2) und in Bezug auf das distale Ende (D) weiter proximal von sich gegenüber stehenden Kabelantrieben (5) der Greiffinger (2) begrenzt ist, wobei die beiden Greiffinger (2) zur Variation des Durchlassquerschnitts über eine Linearstelleinheit (6) in einer Verstellrichtung (y) zueinander verstellbar sind, die einer Querschnittsrichtung des Durchlassquerschnitts entspricht.

2. Greifer (1) nach Anspruch 1, bei dem mindestens einer der Kabelantriebe (5) mindestens eines der Greiffinger (2) mindestens einen Rotationsantrieb (7) aufweist, wobei sich gegenüber stehende Rotationsantriebe (7) der beiden Greiffinger (2) eine gegenläufige Rotationsrichtung aufweisen.

3. Greifer (1) nach Anspruch 2, bei dem mindestens ein Paar sich gegenüber stehender Rotationsantriebe (7) je Rotationsantrieb (7) mindestens ein Rad, eine Walze oder ein Transportband aufweist.

4. Greifer (1) nach einem der Ansprüche 1 bis 3, bei dem die sich gegenüber stehenden Kabelantriebe (5) in der Verstellrichtung (y) der Greiffinger (2) verstellbar und mechanisch vorgespannt, vorzugsweise federvorgespannt, sind.

5. Greifer (1) nach einem der vorangegangenen Ansprüche, der an einer proximalen Kabelauslassseite (23) der sich gegenüber stehenden Kabelantriebe (5) eine Kabelführung (8) aufweist, die in den Durchlassquerschnitt mündet.

6. Greifer (1) nach einem der vorangegangenen Ansprüche, bei dem die sich gegenüber stehenden Greifbacken (4) jeweils um eine sich in der Verstellrichtung (y) erstreckende Achse (x) verstellbar sind.

7. Greifer (1) nach Anspruch 6, bei dem die sich gegenüber stehenden Greifbacken (4) gleichläufig und zwischen zwei in einem Verstellbereich von 0° - 180° zueinander verstellten Positionen um die Achse (x) verstellbar sind.

8. Greifer (1) nach Anspruch 7, bei dem die Greifbacken (4) an ihren in Bezug auf die Achse (x) gegenüber liegenden Längsenden jeweils ein Greifende (9) aufweisen, von denen in beiden der zueinander verstellten Positionen jeweils eines der Greifenden (9) das distale Ende (D) seines Greiffingers (2) und das jeweils andere Greifende (9) an einer gegenüber liegenden Seite in Bezug auf die Achse (x) den Kabelantrieben (5) zugewandt ist.

9. Greifer (1) nach einem der vorangegangenen Ansprüche, bei dem die Linearstelleinheit (6) dazu eingerichtet ist, die Greiffinger (2) wahlweise in mindestens eine der folgenden Positionen relativ zueinander zu bringen:
a. eine Kabelhalteposition, in der die Greifbacken (4) zwischen sich den Durchlassquerschnitt auf einen Kabelquerschnitt, den Querschnitt einer Kabelendbehandlung oder geringer begrenzen;
b. eine Kabeltransportposition, in der die Greifbacken (4) zwischen sich den Durchlassquerschnitt auf einen Kabelquerschnitt oder einen größeren Querschnitt als diesen, der jedoch vorzugsweise geringer als ein Querschnitt einer Kabelendbehandlung ist, begrenzen; und
c. eine Kabelannahmeposition, in der die Greifbacken (4) zwischen sich den Durchlassquerschnitt über einen Kabelquerschnitt und gegebenenfalls eine Kabelendbehandlung hinaus erweitern.

10. Greifer (1) nach einem der vorangegangenen Ansprüche, bei dem die Greiffinger (2) ausschließlich über die Linearstelleinheit (6) zueinander verstellbar sind.

11. Roboter (10), vorzugsweise Knickarmroboter, der einen Greifer (1) nach einem der vorangegangenen Ansprüche aufweist.

12. Verfahren für die automatisierte Verdrahtung elektrischer Komponenten (11) einer elektrischen Schaltanlage, wobei das Verfahren die Schritte aufweist:
a. Abnehmen (100) eines zumindest teilweise vorkonfektionierten Kabels (15) von einer Kabelübergabeschnittstelle (13) mit dem Greifer (1) und/oder dem Roboter (10) nach einem der vorangegangenen Ansprüche;
b. Kontaktieren (200) eines ersten Kabelendes (14) des Kabels (15) an einer ersten Kontaktstelle (16) einer ersten elektrischen Komponente (11) der elektrischen Schaltanlage, Verlegen (300) des Kabels (15) von der ersten Kontaktstelle (16) zu einer zweiten Kontaktstelle (16) einer zweiten elektrischen Komponenten (11) der elektrischen Schaltanlage und Kontaktieren (400) des zweiten Kabelendes (14) an der zweiten elektrischen Kontaktstelle (16);
**dadurch gekennzeichnet, dass** das Abnehmen (100) des Kabels (15) von der Kabelübergabeschnittstelle (13) aufweist:
c. Überführen (110) der Greiffinger (2) über die Linearstelleinheit (6) in eine Kabelannahmeposition, in der die Greifbacken (4) zwischen sich den Durchlassquerschnitt über einen Kabelquerschnitt des Kabels (15) und gegebenenfalls eine Kabelendbehandlung des Kabels (15) hinaus erweitern;
d. Einführen (120) des zweiten Kabelendes (14) über das distale Ende (D) und den erweiterten Durchlassquerschnitt der Greifbacken (4) in den Kabelführungskorridor (3) bis das zweite Kabelende (14) an die Kabelantriebe (5) heranreicht; und
e. Transportieren (130) des Kabels (15) in den Kabelführungskorridor (3), bis das erste Kabelende (14) die Greifbacken (4) erreicht.

13. Verfahren nach Anspruch 12, bei dem das Transportieren (130) des Kabels (15) das Überführen (131) der Greiffinger (2) über die Linearstelleinheit (6) von der Kabelannahmeposition in eine Kabeltransportposition aufweist, in der die Greifbacken (4) zwischen sich den Durchlassquerschnitt auf einen Kabelquerschnitt oder einen größeren Querschnitt als diesen, der jedoch vorzugsweise geringer als ein maximaler Querschnitt einer Kabelendbehandlung ist, begrenzen, so dass das Kabelende (14) zwischen den Greifbacken (4) hindurchgeführt werden kann.

14. Verfahren nach Anspruch 12 oder 13, bei dem das Kontaktieren (200) des ersten und/oder des zweiten Kabelendes das Überführen (131) der Greiffinger (2) über die Linearstelleinheit (6) in eine Kabelhalteposition aufweist, in der die Greifbacken (4) zwischen sich den Durchlassquerschnitt auf einen Kabelquerschnitt, den Querschnitt einer Kabelendbehandlung oder geringer als diese begrenzen, so dass das Kabelende (14) zwischen den Greifbacken (4) gehalten wird.

15. Verfahren nach einem der Ansprüche 12 bis 14, bei dem nach dem Verlegen (300) des Kabels (15) von der ersten Kontaktstelle (16) zu der zweiten Kontaktstelle (16) und vor dem Kontaktieren (400) des zweiten Kabelendes (14) an der zweiten elektrischen Kontaktstelle (16) die sich gegenüber stehenden Greifbacken (4) gleichläufig und um 180° verstellt (350) werden.

## Claims

1. A gripper (1) for the automated wiring of electrical components (11) of an electrical switchgear, the gripper (1) having at least two gripper fingers (2), **characterized in that** the gripper fingers (2) delimit a cable guide corridor (3) between them, the passage cross-section of which is delimited at a distal end (D) of the gripper fingers (2) by opposing gripper jaws (4) of the gripper fingers (2) and, with respect to the distal end (D), further proximally by opposing cable drives (5) of the gripper fingers (2), wherein in order to vary the passage cross-section the two gripper fingers (2) being adjustable relative to one another via a linear adjusting unit (6) in an adjustment direction (y) which corresponds to a cross-sectional direction of the passage cross-section.

2. The gripper (1) according to claim 1, in which at least one of the cable drives (5) of at least one of the gripper fingers (2) has at least one rotary drive (7), wherein rotary drives (7) of the two gripper fingers (2) which are located opposite one another have a direction of rotation in opposite directions.

3. The gripper (1) according to claim 2, wherein at least one pair of opposing rotary drives (7) comprises at least one wheel, roller or conveyor belt per rotary drive (7).

4. The gripper (1) according to any one of claims 1 to 3, in which the opposing cable drives (5) are adjustable in the adjustment direction (y) of the gripper fingers (2) and are mechanically pretensioned, preferably spring-pretensioned.

5. The gripper (1) according to any one of the preceding claims, comprising, on a proximal cable outlet side (23) of the opposing cable drives (5), a cable guide (8) opening into the passage cross-section.

6. The gripper (1) according to any one of the preceding claims, wherein the opposing gripper jaws (4) are each adjustable about an axis (x) extending in the direction of adjustment (y).

7. The gripper (1) according to claim 6, in which the opposing gripper jaws (4) can be adjusted in the same direction and between two positions about the axis (x) which are adjusted in an adjustment range of 0° - 180° relative to one another.

8. The gripper (1) according to claim 7, wherein the gripper jaws (4) each have a gripping end (9) at their longitudinal ends opposite to each other with respect to the axis (x), of which, in both of the positions displaced with respect to each other, one of the gripping ends (9) faces the distal end (D) of its gripper finger (2) and the other gripping end (9) faces the cable drives (5) at an opposite side with respect to the axis (x).

9. The gripper (1) according to any one of the preceding claims, wherein the linear actuator (6) is arranged to selectively bring the gripper fingers (2) into at least one of the following positions relative to each other:
a. a cable holding position in which the gripper jaws (4) between them limit the passage cross-section to a cable cross-section, or the cross-section of a cable end treatment, or less;
b. a cable transport position in which the gripper jaws (4) between them limit the passage cross-section to a cable cross-section or to a cross-section greater than the cable cross-section, but preferably less than a cross-section of a cable end treatment; and
c. a cable receiving position in which the gripper jaws (4) between them extend the passage cross-section beyond a cable cross-section and possibly a cable end treatment.

10. The gripper (1) according to any one of the preceding claims, in which the gripper fingers (2) are adjustable relative to one another exclusively via the linear adjustment unit (6).

11. A robot (10), preferably an articulated arm robot, comprising a gripper (1) according to any one of the preceding claims.

12. A method for automated wiring of electrical components (11) of an electrical switchgear, said method comprising the steps of:
a. Removing (100) an at least partially prefabricated cable (15) from a cable transfer interface (13) with the gripper (1) and/or the robot (10) according to any one of the preceding claims;
b. contacting (200) a first cable end (14) of the cable (15) at a first contact point (16) of a first electrical component (11) of the electrical switchgear, routing (300) the cable (15) from the first contact point (16) to a second contact point (16) of a second electrical component (11) of the electrical switchgear, and contacting (400) the second cable end (14) at the second electrical contact point (16);
**characterized in that** said removing (100) of the cable (15) from the cable transfer interface (13) comprises:
c. Transferring (110) the gripper fingers (2) via the linear positioning unit (6) to a cable receiving position in which the gripper jaws (4) extend the passage cross-section between them beyond a cable cross-section of the cable (15) and, if necessary, a cable end treatment of the cable (15);
d. inserting (120) the second cable end (14) via the distal end (D) and the expanded passage cross-section of the gripper jaws (4) into the cable guide corridor (3) until the second cable end (14) reaches the cable drives (5); and
e. Transporting (130) the cable (15) into the cable guide corridor (3) until the first cable end (14) reaches the gripper jaws (4).

13. The method of claim 12, wherein transporting (130) the cable (15) comprises transferring (131) the gripper fingers (2) via the linear actuator (6) from the cable receiving position to a cable transporting position in which the gripper jaws (4) between them limit the passage cross-section to a cable cross-section or a cross-section greater than but preferably less than a maximum cross-section of a cable end treatment so that the cable end (14) can be passed between the gripper jaws (4).

14. The method of claim 12 or 13, wherein contacting (200) the first and/or the second cable end comprises transferring (131) the gripper fingers (2) via the linear actuator (6) to a cable holding position in which the gripper jaws (4) limit the passage cross-section between them to a cable cross-section, the cross-section of a cable end treatment, or less than this, so that the cable end (14) is held between the gripper jaws (4).

15. The method according to any one of claims 12 to 14, wherein after laying (300) the cable (15) from the first contact point (16) to the second contact point (16) and before contacting (400) the second cable end (14) at the second electrical contact point (16), the opposing gripper jaws (4) are adjusted (350) in the same direction and by 180°.

## Revendications

1. Préhenseur (1) pour le câblage automatisé de composants électriques (11) d'une installation de commutation électrique, dans lequel le, préhenseur (1) comprend au moins deux doigts de préhension (2), **caractérisé en ce que** les doigts de préhension (2) délimitent entre eux un corridor de guidage de câble (3) dont la section transversale de passage au niveau d'une extrémité distale (D) des doigts de préhension (2) est limitée par des mâchoires de préhension (4) des doigts de préhension (2), qui se font face, et, de manière plus proximale par rapport à l'extrémité distale (D), par des entraînements de câbles (5) des doigts de préhension (2), qui se font face, dans lequel les deux doigts de préhension (2) peuvent être déplacés l'un par rapport à l'autre, afin de faire varier la section transversale de passage, à l'aide d'une unité de réglage linéaire (6), dans une direction de déplacement (y), qui correspond à une direction de section transversale de la section transversale de passage.

2. Préhenseur (1) selon la revendication 1, dans lequel au moins un des entraînements de câbles (5) d'au moins un des doigts de préhension (2) comprend au moins un entraînement rotatif (7), dans lequel les entraînements rotatifs (7) des deux doigts de préhension (2), qui se font face, présentent des sens de rotation opposés.

3. Préhenseur (1) selon la revendication 2, dans lequel au moins une paire d'entraînements rotatifs (7) qui se font face, comprend, pour chaque entraînement rotatif (7), au moins une roue, un rouleau ou une bande de transport.

4. Préhenseur (1) selon l'une des revendications 1 à 3, dans lequel les entraînements de câbles (5), qui se font face, peuvent être déplacés et précontraints mécaniquement, de préférence à l'aide d'un ressort, dans la direction de déplacement (y) des doigts de préhension (2).

5. Préhenseur (1) selon l'une des revendications précédentes, qui comprend, sur un côté de sortie de câble proximal (23) des entraînements de câbles (5) qui se font face, un guidage de câble (8) qui débouche dans la section transversale de passage.

6. Préhenseur (1) selon l'une des revendications précédentes, dans lequel les mâchoires de préhension (4) qui se font face peuvent être déplacées chacune autour d'un axe (x) d'étendant dans la direction de déplacement (y).

7. Préhenseur (1) selon la revendication 6, dans lequel les mâchoires de préhension (4) qui se font face peuvent être déplacées dans le même sens et entre deux positions décalées entre elles dans une plage de déplacement de 0° - 180° autour de l'axe (x).

8. Préhenseur (1) selon la revendication 7, dans lequel les mâchoires de préhension (4) comprennent chacune, au niveau de leurs extrémités longitudinales qui font face à l'axe (x), une extrémité de préhension (9), dont, dans les deux positions, déplacées l'une par rapport à l'autre, respectivement d'une des extrémités de préhension (9), l'extrémité distale (D) de son doigt de préhension (2) et l'autre extrémité de préhension (9) est orienté vers les entraînements de câble (5) au niveau d'un côté opposé par rapport à l'axe (x).

9. Préhenseur (1) selon l'une des revendications précédentes, dans lequel l'unité de réglage linéaire (6) est conçue pour amener les doigts de préhension (2) au choix dans au moins une des positions suivantes les uns par rapport aux autres :
a. une position de maintien des câbles dans laquelle les mâchoires de préhension (4) limitent entre elles la section transversale de passage à une section transversale de câble, à la section transversale d'un traitement d'extrémité de câble ou moins ;
b. une position de transport des câbles, dans laquelle les mâchoires de préhension (4) limitent entre elles la section transversale de passage à une section transversale de câble ou à une section transversale plus grande que celle-ci, mais qui est cependant plus petite qu'une section transversale d'un traitement d'extrémité de câble ; et
c. une position d'insertion de câbles, dans laquelle les mâchoires de préhension (4) élargissent entre elles la section transversale de passage au-delà d'une section transversale de câble et, le cas échéant, d'un traitement d'extrémité de câble.

10. Préhenseur (1) selon l'une des revendications précédentes, dans lequel les doigts de préhension (2) peuvent être déplacés les uns par rapport aux autres exclusivement par l'intermédiaire de l'unité de réglage linéaire (6).

11. Robot (10), de préférence robot à bras articulé, qui comprend un préhenseur (1) selon l'une des revendications précédentes.

12. Procédé pour le câblage automatisé de composants électriques (11) d'une installation de commutation électrique, dans lequel ce procédé comprend les étapes suivantes :
a. retrait (100) d'un câble au moins partiellement pré-confectionné (15) d'une interface de transfert de câble (13) avec le préhenseur (1) et/ou le robot (10) selon l'une des revendications précédentes ;
b. mise en contact (200) d'une première extrémité de câble (14) du câble (15) au niveau d'un premier point de contact (16) d'un premier composant électrique (11) de l'installation de commutation électrique, pose (300) du câble (15) du premier point de contact (16) vers un deuxième point de contact (16) d'un deuxième composant électrique (11) de l'installation de commutation électrique et mise en contact (400) de la deuxième extrémité de câble (14) au niveau du deuxième point de contact électrique (16) ;
**caractérisé en ce que** le retrait (100) du câble (15) de l'interface de transfert de câble (13) comprend :
c. déplacement (110) des doigts de préhension (2), par l'intermédiaire de l'unité de réglage linéaire (6), vers une position d'insertion de câble, dans laquelle les mâchoires de préhension (4) élargissent entre elles la section transversale de passage au-delà d'une section transversale de câble du câble (15) et, le cas échéant, d'un traitement d'extrémité de câble du câble (15) ;
d. insertion (120) de la deuxième extrémité de câble (14) par l'intermédiaire de l'extrémité distale (D) et de la section transversale de passage élargie des mâchoires de préhension (4) dans le corridor de guidage de câble (3) jusqu'à ce que la deuxième extrémité de câble (14) arrive aux entraînements de câbles (5) ;
e. transport (130) du câble (15) dans le corridor de guidage de câble (3) jusqu'à ce que la première extrémité de câble (14) atteigne les mâchoires de préhension (4).

13. Procédé selon la revendication 12, dans lequel le transport (130) du câble (15) comprend le déplacement (131) des doigts de préhension (2) par l'intermédiaire de l'unité de réglage linéaire (6) de la position d'insertion de câble vers une position de transport de câble dans laquelle les mâchoires de préhension (4) limitent entre elles la section transversale de passage à une section transversale de câble ou à une section transversale plus grande que celle-ci, mais qui est cependant plus petite qu'une section transversale maximale d'un traitement d'extrémité de câble, de façon à ce que l'extrémité de câble (14) soit guidée entre les mâchoires de préhension (4).

14. Procédé selon la revendication 12 ou 13, dans lequel la mise en contact (200) de la première et/ou de la deuxième extrémité de câble comprend le déplacement (131) des doigts de préhension (2) par l'intermédiaire de l'unité de réglage linéaire (6) vers une position de maintien de câble dans laquelle les mâchoires de préhension (4) limitent entre elles la section transversale de passage à une section transversale de câble, à la section transversale d'un traitement d'extrémité de câble ou à une section plus petite que celles-ci, de façon à ce que l'extrémité de câble (14) soit maintenue entre les mâchoires de préhension (4).

15. Procédé selon l'une des revendications 12 à 14, dans lequel, après la pose (300) du câble (15) du premier point de contact (16) au deuxième point de contact (16) et avant la mise en contact (400) de la deuxième extrémité de câble (14) au niveau du deuxième point de contact électrique (16), les mâchoires de préhension (4), qui se font face, sont déplacées (350) dans le même sens et de 180°.
